# EUROPEAN PATENT SPECIFICATION

(11) **EP 3 251 925 B1**
(45) Date of publication and mention of the grant of the patent: **06.01.2021**
(21) Application number: 17170873.8
(22) Date of filing: 12.05.2017
(51) Int. Cl.: B62J 6/02, B62J 17/02

(54) **STRADDLE-TYPE VEHICLE**
GRÄTSCHSITZFAHRZEUG
VÉHICULE DE TYPE À ENFOURCHER

(30) Priority: 31.05.2016 CN 201610375276
(43) Date of publication of application: 06.12.2017
(73) Proprietor: Yamaha Hatsudoki Kabushiki Kaisha, Iwata-shi Shizuoka 438-8501 (JP)
(72) Inventor: Chen, Chun-Yu, 320 Taoyuan City (TW); Wang, Yao-Te, 320 Taoyuan City (TW)
(74) Representative: Zimmermann, Tankred Klaus

(56) References cited:
- EP-A1- 1 914 155
- EP-A1- 2 876 027
- EP-A1- 3 006 313
- EP-A2- 0 953 500
- EP-A2- 2 168 856
- EP-A2- 2 489 582
- JP-A- H0 986 463
- US-A1- 2007 240 924

## Description

### Background of the Invention

### Field of the Invention

The present invention relates to a straddle-type vehicle, which is of the scooter-type.

### Description of the Prior An

US 2007/240924 A1 discloses all of the features of the preamble of claim 1.

The straddle-type vehicle described in Patent Document 1 has a front cover disposed in front of a head pipe of a vehicle body frame. Also, a headlamp is disposed in a lower portion of the front cover. In the straddle-type vehicle, a large headlamp is employed in order to increase the quantity of light of the headlamp. Moreover, in the straddle-type vehicle, in order to avoid interference with members disposed behind the headlamp, a front end of the headlamp is located further forward than the axle of the front wheel and a large headlamp is disposed in a limited space.

In another aspect, in the straddle-type vehicle, a metering unit is disposed in the center of an upper portion of the front cover. The metering unit has a transparent cover through which a driver reads the display of the display portion. Also, a front cover upper portion is formed in the center of the upper portion of the front cover, to prevent raindrops from reaching the metering unit. The front cover upper portion is formed in a position overlapping with the metering unit in front of the metering unit and in a vehicle width direction. Also, the front cover upper portion extends backwards and upwards.

Also, the front cover upper portion overlaps with the metering unit in an up-down direction and in a front-back direction. Therefore, the metering unit is disposed in a space formed by the front cover upper portion behind the front cover upper portion (refer to FIGs. 5 and 6 of Patent Document 1). As a result, the raindrops flowing along the front cover upper portion are discharged backwards from backwards and upwards compared to the front end of the metering unit. Thus, it is difficult for raindrops to reach the display portion of the metering unit.
Patent Document 1: Taiwan Patent Publication No. 201429778 Gazette
Patent Document 2: Taiwan Patent Publication No. 201615472 Gazette

EP 3 006 313 A1 describes a straddled vehicle including an upper cowling, a harness, and a headlight unit wherein the upper cowling includes a first upper cowling at least partially disposed laterally of a duct and attached to the duct, and a second upper cowling disposed above the duct and attached to the first upper cowling, the harness includes a main harness adjacent to at least a first end of a vehicle body frame, and a sub harness branched from the main harness and connected to electrical components, a part of the sub harness is connected to the electrical components adjacent to a second end of the vehicle body frame through a space above the duct and the headlight unit is attached to a lower part of the first upper cowling laterally.

### Summary of the Invention

### [Object]

It is an object of the present invention to provide a scooter-type vehicle, wherein in a structure where a headlamp disposed in a lower portion of a front cover and is located further forward than an axle of a front wheel, an upper portion of the front cover can be reduced in size in a front-back direction and an up-down direction.

This object is achieved by the subject matter as defined in the independent claims.

### [Problems to be solved by the invention]

However, in the straddle-type vehicle described in Patent Document 1, the large headlamp is located further forward than the axle of the front wheel. In addition, the front cover upper portion formed in the center of the upper portion of the front cover extends significantly upwards and backwards. Therefore, the front cover is easy to be imagined heavy. Therefore, the inventors considered a design to make the front cover lightweight. However, if the headlamp is reduced in order to reduce the size of the lower portion of the front cover, the quantity of light decreases. Also, when the position of the headlamp is changed to the back in order to reduce the size of the lower portion of the front cover, the layout of the members disposed behind is difficult. Therefore, the inventors considered a design to make the upper portion of the front cover lightweight.

### [Technical means of solving the problems]

Therefore, at first, the inventors considered disposing a metering unit at a handlebar. The reason lies in that: if the space of the disposed metering unit in the upper portion of the front cover is empty, the front edge of the upper portion of the front cover may be located rearward and below corresponding to the size of the space, thus reducing the size of the upper portion of the front cover.

However, in fact, the metering unit is disposed at the handlebar, and according to the teachings of Patent Document 1, the upper portion of the front cover overlaps with the metering unit mounted to the handlebar in an up-down direction and overlaps with it in a front-back direction, but the front cover cannot be reduced in size. That is, even if the metering unit is disposed at the handlebar, if the upper portion of the front cover is disposed according to the teachings of Patent Document 1, the rear end of the center in the vehicle width direction of the upper portion of the front cover may also be extended to be located further above or higher than an upper end of the metering unit and further rearward than a front end of the metering unit, and thus the upper portion of the front cover enlarges. If the upper portion of the front cover is large, the upper portion of the front cover cannot be reduced in size in a front-back direction and an up-down direction.

Therefore, the inventors thinking changed. In Patent Document 2, the upper portion of the front cover neither overlaps in an up-down direction nor overlaps in a front-back direction relative to the metering unit disposed at the handlebar. Therefore, the upper portion of the front cover is reduced in size in a front-back direction and an up-down direction. Therefore, the inventors considered disposing the metering unit described in Patent Document 1 at the handlebar structure such that there is no impact on the riders' comfort even if the upper portion of the front cover is not a structure preventing raindrops from reaching the metering unit, and can reduce the upper portion of the front cover in a front-back direction and an up-down direction.

However, a new problem arises. In the straddle-type vehicle described in Patent Document 1, the headlamp is located further forward than the axle of the front wheel, and thus a lower portion of the front cover is easy to position at the front. Therefore, compared with the straddle-type vehicle described in Patent Document 2 where the headlamp is located further rearward than the axle of the front wheel, a tilt angle from a front end of the center in the vehicle width direction of the front cover to the rear end, that is, in a side view, is easy to become small or to be reduced relative to a horizontal angle. That is, the tilting easily becomes gentle.

If the upper portion of the front cover is reduced in size in a front-back direction and an up-down direction, the tilt angle is further reduced easily. That is, if the lower portion of the front cover located further forward than the axle of the front wheel is connected to the upper portion of the front cover located further below and rearward via continuous cover surfaces, the tilt angle is further reduced easily. In the structure, if muddy water is swept up by the front wheel onto the center in the vehicle width direction of the front wheel, the muddy water easily flows to the rear end of the center in the vehicle width direction of the front cover.

That is, if, as per the straddle-type vehicle described in Patent Document 2, the front cover tilts abruptly, the muddy water on the center in the vehicle width direction of the front cover flows to the rear end, and may easily be discharged towards the left and the right. Therefore, it is difficult for the muddy water to reach the rear end of the center in the vehicle width direction of the front cover. On the other hand, if the center in the vehicle width direction of the front cover is gently tilted, it is difficult for the muddy water in the center in the vehicle width direction of the front cover to flow towards the right and the left. Therefore, the muddy water may easily reach the center in the vehicle width direction of the front cover.

The muddy water reaching the rear end of the center in the vehicle width direction of the front cover, after splashing towards and hitting the metering unit, falls down onto the display portion of the metering unit. Herein, the drops of muddy water dirty the display portion of the metering unit. Regarding the rain, although the riders' comfort is not impacted by ensuring water resistance of the metering unit, the mud attached to the metering unit makes the riders' ride unpleasant, and thus becomes a problem.

Therefore, the present invention employs a structure according to appended claim 1.

According to a first implementation form of the present invention, as the metering unit is disposed at the handlebar, it is unnecessary to set an arrangement space of the metering unit in the front cover upper portion. Also, the rear end of the center in the vehicle width direction of the front cover upper portion is located further forward than the metering unit, and located further below than the upper end of the metering unit. Therefore, compared with the manner disposing the rear end of the center in the vehicle width direction of the front cover upper portion further above or higher than the upper end of the metering unit and further rearward than the front end of the metering unit, the front cover upper portion is reduced in size or becomes small. In this way, the upper portion of the front cover can be reduced in size in a front-back direction and an up-down direction.

Also, the rear end of the center in the vehicle width direction of the front cover upper portion is located above the lower end of the metering unit, and thus the muddy water discharged from the rear end of the center in the vehicle width direction of the front cover upper portion splashes upwards and backwards substantially along the tilt angle of the front cover upper portion. The inventors noticed that, if the rear end of the center in the vehicle width direction of the front cover upper portion is located further below than the lower end of the metering unit, the muddy water easily impacts the metering unit. Therefore, at first, the rear end of the center in the vehicle width direction of the front cover upper portion is disposed further above or higher than the lower end of the metering unit. Also, in a side view, an extension line of the center in the vehicle width direction of the front cover passes through a position further forward than the metering unit. Even if the rear end of the center in the vehicle width direction of the front cover upper portion is disposed further above or higher than the lower end of the metering unit, if the tilt angle of the center in the vehicle width direction of the front cover upper portion is smaller, the muddy water also easily impacts the metering unit. Herein, the muddy water reaching the rear end of the center in the vehicle width direction of the front cover upper portion, in a side view, splashes towards the direction of the extension line of the center in the vehicle width direction of the front cover. Therefore, if the tilt angle is set in a manner passing through a position further forward than the metering unit, the muddy water easily splashes along the extension line, and splashes upwards in front of the metering unit. Therefore, the muddy water impacting the metering unit is reduced.

Also, in terms of a vehicle where the headlamp is located further forward than the axle of the front wheel, the tilt angle of the center in the vehicle width direction of the front cover is easily becomes gentle. Thus, if the front cover upper portion is reduced in size in a front-back direction and an up-down direction, the tilt angle of the center in the vehicle width direction of the front cover easily become more gentle. If the tilt angle of the center in the vehicle width direction of the front cover becomes gentle, it is difficult for the muddy water on the front cover to flow towards left and right. In this way, even if in a structure where the muddy water may easily flow along the center in the vehicle width direction of the front cover, the water flowing to the rear end of the center in the vehicle width direction of the front cover upper portion may not impact the metering unit, but is discharged backwards. Therefore, it is difficult for the muddy water to attach to the transparent cover of the metering unit. Thus, an impact on the riders' comfort may be inhibited.

Thus, in a structure where the headlamp disposed in a lower portion of the front cover is located further forward than the axle of the front wheel, the upper portion of the front cover may be reduced in size in a front-back direction and an up-down direction, and an impact on the riders' comfort may be inhibited.

The purport of a scooter-type vehicle of a second implementation form of the present invention is as follows: a front end of the metering unit is located further forward than a rear end of the head pipe, and the rear end of the center in the vehicle width direction of the front cover upper portion is located further rearward than a front end of the head pipe.

According to the second implementation form of the present invention, a front end of the metering unit is located further forward than a rear end of the head pipe, and the rear end of the center in the vehicle width direction of the front cover upper portion is located further rearward than a front end of the head pipe. Therefore, a vehicle front-back-direction distance between the rear end of the center in the vehicle width direction of the front cover upper portion and the front end of the metering unit is shortened. That is, the rear end of the center in the vehicle width direction of the front cover upper portion is located near the front end of the metering unit. Therefore, the muddy water swept up by the front wheel and flowing to the rear end of the center in the vehicle width direction of the front cover upper portion easily goes beyond the metering unit. Therefore, the front cover may not be extended, the upper portion of the front cover may be reduced in size in a front-back direction and an up-down direction, and impact on the riders' comfort may be inhibited.

The purport of a scooter-type vehicle of a third implementation form of the present invention is as follows: a vehicle front-back-direction length of the center in the vehicle width direction of the front cover upper portion is longer than an up-down-direction length.

According to the third implementation form of the present invention, a vehicle front-back-direction length of the center in the vehicle width direction of the front cover upper portion is longer than an up-down-direction length. In other words, a tilt angle formed by a line connecting the front end and the rear end of the center in the vehicle width direction of the front cover upper portion and the horizontal line is less than 45 degrees. Therefore, for example, as the scooter-type vehicle described in Patent Document 1, the vehicle front-back-direction length of the center in the vehicle width direction of the front cover upper portion is the same as or shorter than the up-down-direction length. In other words, compared with the straddle-type vehicle where the tilt angle formed by the line connecting the front end and the rear end of the center in the vehicle width direction of the front cover upper portion and the horizontal line is more than 45 degrees, the tilting of the center in the vehicle width direction of the front cover upper portion may become gentle. As stated above, the upper portion of the front cover may be reduced in size in an up-down direction and a front-back direction.

The purport of a scooter-type vehicle of a fourth implementation form of the present invention, the handlebar has a grip portion for a driver to grip, and the rear end of the center in the vehicle width direction of the front cover upper portion is located further below than an upper end of the grip portion.

According to the fourth implementation form of the present invention, for example, as the straddle-type vehicle described in Patent Document 1, compared with the scooter-type vehicle where the rear end of the center in the vehicle width direction of the front cover upper portion is as high as an upper end of the grip portion of the handlebar or higher than the upper end, the rear end of the center in the vehicle width direction of the front cover upper portion may become lower. As stated above, the upper portion of the front cover may be reduced in size in an up-down direction.

The purport of a scooter-type vehicle of a fifth implementation form of the present invention is as follows: having a wiring harness portion connected to the bottom of the metering unit, wherein in a front view, the wiring harness portion is hidden behind the front cover upper portion.

According to the fifth implementation form of the present invention, the front cover upper portion shields the wiring harness portion of the metering unit from the front. Therefore, the appearance can be improved when the vehicle is in a front view, and the muddy water splashing towards the wiring harness portion from the front cover can be prevented from splashing to the wiring harness portion.

The purport of a scooter-type vehicle of a sixth implementation form of the present invention is as follows: the metering unit is disposed further forward than a shaft axis of the steering shaft.

According to the sixth implementation form of the present invention, the metering unit is disposed further forward than a shaft axis of the steering shaft, and thus the metering unit may be located near the front cover upper portion. Therefore, the muddy water swept up by the front wheel and flowing to the rear end of the center in the vehicle width direction of the front cover upper portion easily goes beyond the metering unit. Therefore, the front cover may not be extended, the upper portion of the front cover may be reduced in size in a front-back direction and an up-down direction, and impact to the riders' comfort may be inhibited.

The purport of a scooter-type vehicle of a seventh implementation form of the present invention is as follows: the front cover upper portion has: a first surface, formed in a manner that a vehicle width direction outer-side end portion is located further rearward than the center in the vehicle width direction; and a second surface, formed in a manner that a vehicle width direction outer-side end portion opposite a side where the first surface is disposed is located further rearward than the center in the vehicle width direction.

According to the seventh implementation form of the present invention, the water on the surface of the front cover, due to the air flow generated during driving, advances along the first surface or the second surface towards a vehicle width direction outer side, and splashes from the front cover upper portion towards the vehicle width direction outer side, and thus the muddy water cannot form easily on the transparent cover of the metering unit. Therefore, the front cover may not be extended, the upper portion of the front cover may be reduced in size in a front-back direction and an up-down direction, and impact on the riders' comfort may be inhibited.

The purport of a scooter-type vehicle of an eighth implementation form of the present invention is as follows: a rear edge of the front cover upper portion including the rear end of the center in the vehicle width direction of the front cover upper portion is, in a front view, formed in a manner that a vehicle width direction outer end is located further below than the rear end of the center in the vehicle width direction of the front cover upper portion, and in a state where the handlebar is rotated to the maximum angle, the rear edge passes under the handlebar.

According to the eighth implementation form of the present invention, when the handlebar is operated, the handlebar does not interfere with the front cover upper portion, and thus a gap between the front cover upper portion and the metering unit may become small or may be reduced in a vehicle front-back direction. Thus, the muddy water swept up by the front wheel and flowing to the rear end of the center in the vehicle width direction of the front cover upper portion easily goes beyond the metering unit. Therefore, the front cover may not be extended, the upper portion of the front cover may be reduced in size in a front-back direction and an up-down direction, and impact on the riders' comfort may be inhibited.

The purport of a scooter-type vehicle of a ninth implementation form of the present invention is as follows: the front cover has a front plane extending backwards and upwards from an upper edge of the headlamp, the front cover upper portion is formed in a manner protruding upwards relative to the front plane, and the scooter-type vehicle has a horn disposed behind the front cover, and a horn hole for the sound of the horn to pass through is disposed between a lower end portion of the front cover upper portion and the front plane, wherein in a front view, the horn overlaps with the horn hole.

According to the ninth implementation form of the present invention, a horn hole for the sound of the horn to pass through is disposed between a lower end portion of the front cover upper portion and the front plane, and thus there is an order difference portion formed by the horn hole between the lower end portion of the front cover upper portion and the front plane. Therefore, it is difficult for the muddy water swept up by the front wheel and on the front plane of the front cover to reach the surface of the front cover upper portion. Therefore, it is difficult for the muddy water to form or attach on the transparent cover of the metering unit. In this way, impact on the riders' comfort may be inhibited.

### [Effects of the invention]

The present invention provides a scooter-type vehicle, wherein in a structure where a headlamp disposed in a lower portion of a front cover is located further forward than an axle of a front wheel, an upper portion of the front cover can be reduced in size in a front-back direction and an up-down direction, and impact on the riders' comfort can be inhibited.

### Brief description of the drawings

FIG. 1 shows a left side view of a scooter-type vehicle;
FIG. 2 shows a front view of the scooter-type vehicle
FIG. 3 shows a top view of the scooter-type vehicle;
FIG. 4 shows an enlarged front portion of FIG. 1;
FIG. 5 shows an enlarged front portion of the scooter-type vehicle when observed from a driver riding the scooter-type vehicle;
FIG. 6 shows a front view of a front cover;
FIG. 7 shows a three-dimensional view of the front cover;
FIG. 8 shows a side view of the front cover; and
FIG. 9 shows an enlarged front portion of the scooter-type vehicle when observed from a driver riding the scooter-type vehicle, and is a diagram indicating that the handlebar is rotated to the maximum angle.

### Detailed Description

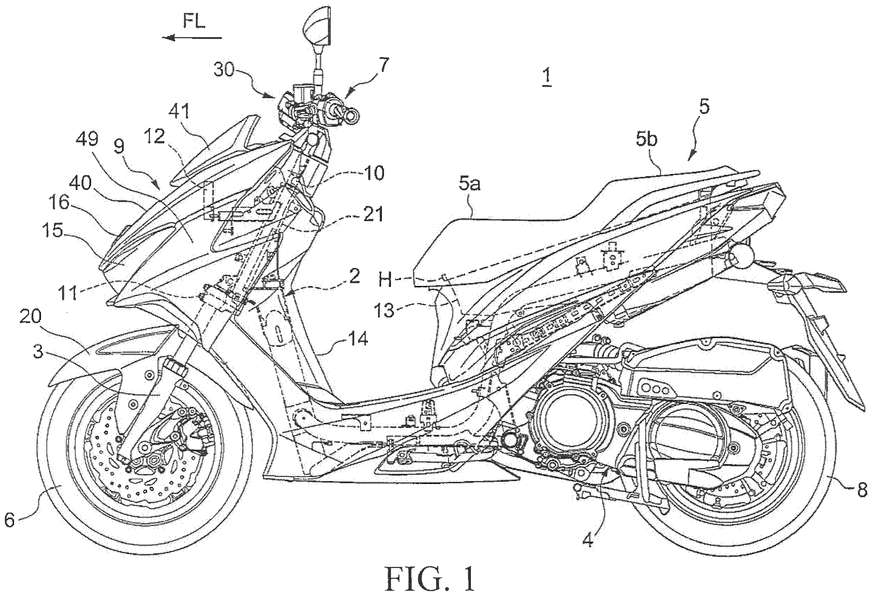

The implementation forms of the present invention are described below based on the accompanying drawings. As shown in FIG. 1, the straddle-type vehicle applied to the implementation forms is a scooter-type vehicle 1. In the following description, the front and rear sides refer to front and rear sides in a vehicle front-back direction of the scooter-type vehicle 1, respectively, and the left and right sides refer to left and right sides in a vehicle width direction of the scooter-type vehicle 1, respectively, and are left and right sides observed from a rider of the scooter-type vehicle 1. In addition, the upper and lower sides refer to the upper and lower sides in a vehicle up-down direction of the scooter-type vehicle 1, respectively. The sign FL in FIG. 1 indicates the front.

### <The whole vehicle>

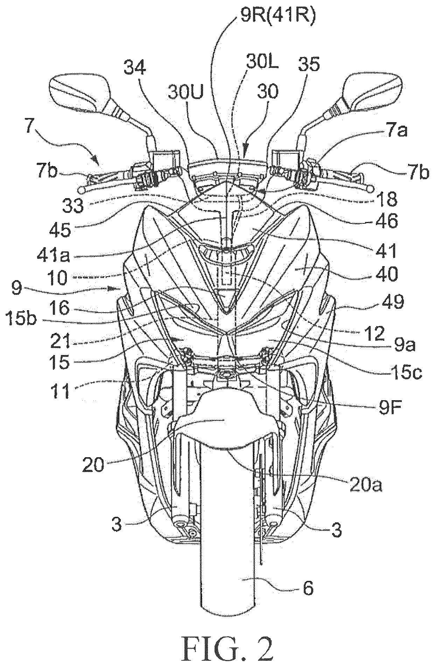

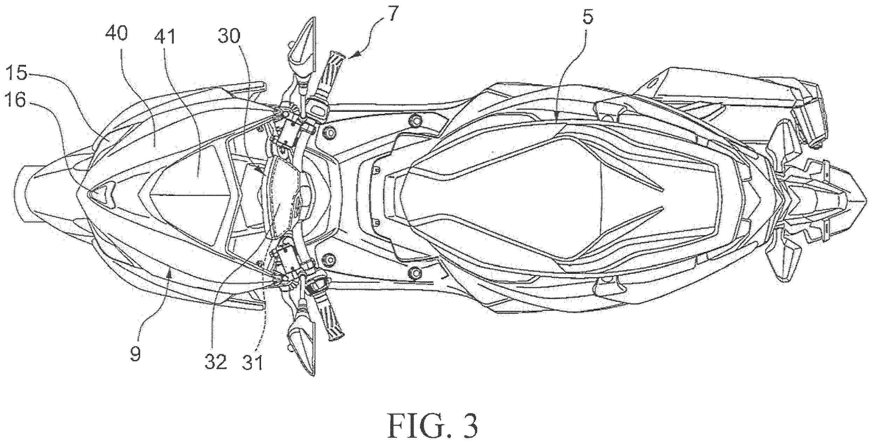

The whole construction of the scooter-type vehicle 1 according to the implementation form is now described with reference to FIG. 1 to FIG. 3. FIG. 1 is a left side view of the scooter-type vehicle 1 according to the implementation form. FIG. 2 is a front view thereof. FIG. 3 is a top view thereof. Moreover, FIG. 3 indicates the appearance of the vehicle, and in FIG. 1, dashed lines are used to represent some vehicle internal structures such as a vehicle body frame 2 and a storage box 13. Also, in FIG. 2, dashed lines are used to represent some vehicle internal structures such as a head pipe 21.

As shown in FIGs. 1-3, a front end portion of the underbone vehicle body frame 2 rotatably supports a front fork 3 left and right, and a central portion of the vehicle body frame 2 supports a swing-type power unit 4. Above the power unit 4, a saddle portion 5 having a front saddle portion 5a and a rear saddle portion 5b for two persons to ride is mounted. The saddle portion 5 takes a hinge pin H in the front end portion as a center and can be opened and closed relative to the storage box 13 between the vehicle body frame 2.

The front portion of the vehicle body frame 2 has a head pipe 21. The head pipe 21 is rotatably supported with a steering shaft 10. The head pipe 21 and the steering shaft 10 extend obliquely and downwards. A pair of front forks 3 extends obliquely and downwards, and a front wheel 6 is configured in a lower end thereof. An upper portion of the front wheel 6 is provided with a front fender 20 that blocks mud. Upper ends of the front forks are mounted to a lower end portion of the steering shaft 10 via a bottom bracket 11 disposed at the lower end portion of the steering shaft 10. Therefore, the front wheel 6 is supported on the vehicle body frame 2 via the steering shaft 10. A handlebar 7 is supported on an upper end portion of the steering shaft 10. A metering unit 30 is mounted in the handlebar 7. Also, a rear end portion of the power unit 4 is provided with a rear wheel 8. Upper portions of the front forks 3, the steering shaft 10, and the head pipe 21 are covered by a front cover 9 and a leg shield 14 from front to back.

### <Front wheel>

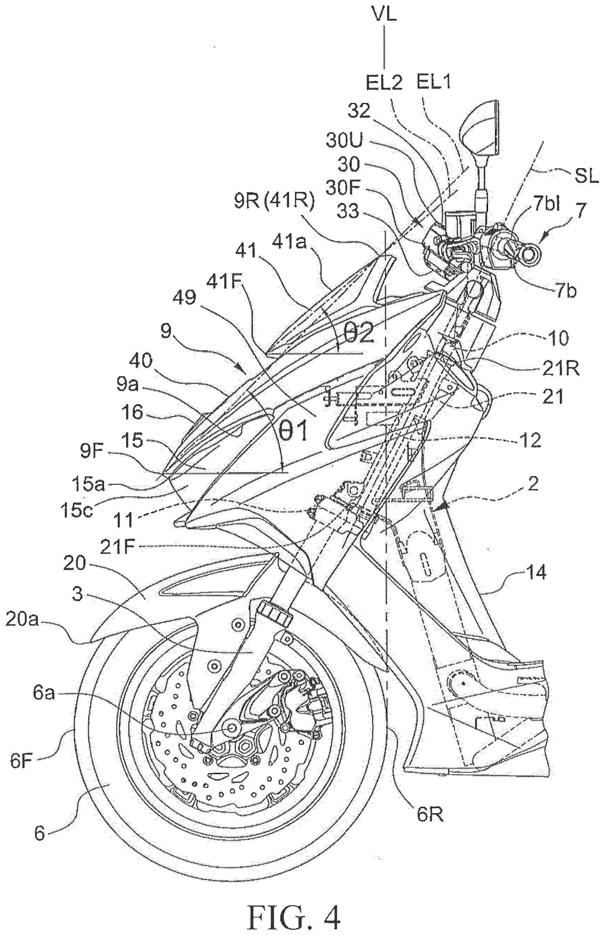

The front wheel 6 is now described with reference to FIG. 4. FIG. 4 is an enlarged front portion of FIG. 1. The front wheel 6 is mounted to the axle 6a. The axle 6a is an axle member for mounting the front wheel 6 to the vehicle body, and is connected to lower portions of the front forks 3. In a side view, the axle 6a is located in the center of the front wheel 6. In this implementation form, the axle 6a is directly connected to the lower portions of the front forks 3, but the axle and the front forks, for example, may also be indirectly connected via other members. Also, the front fender 20 covers the upper portion of the front wheel 6, and a front end 20a of the front fender 20 is located further forward than the axle 6a. The front end 20a is located further forward than the front end 15a of the headlamp 15. Also, the front end 20a is located further forward than the front end 9F of the front cover 9.

### <Front cover>

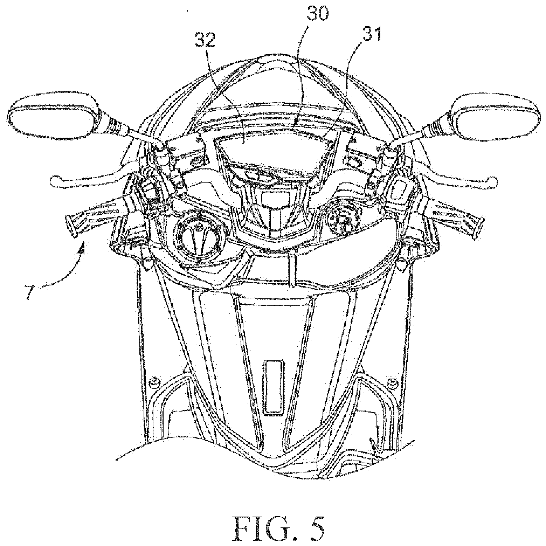

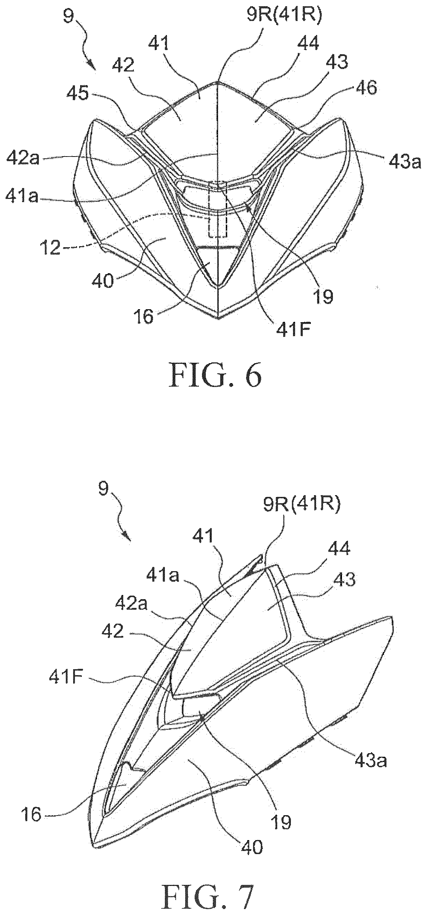

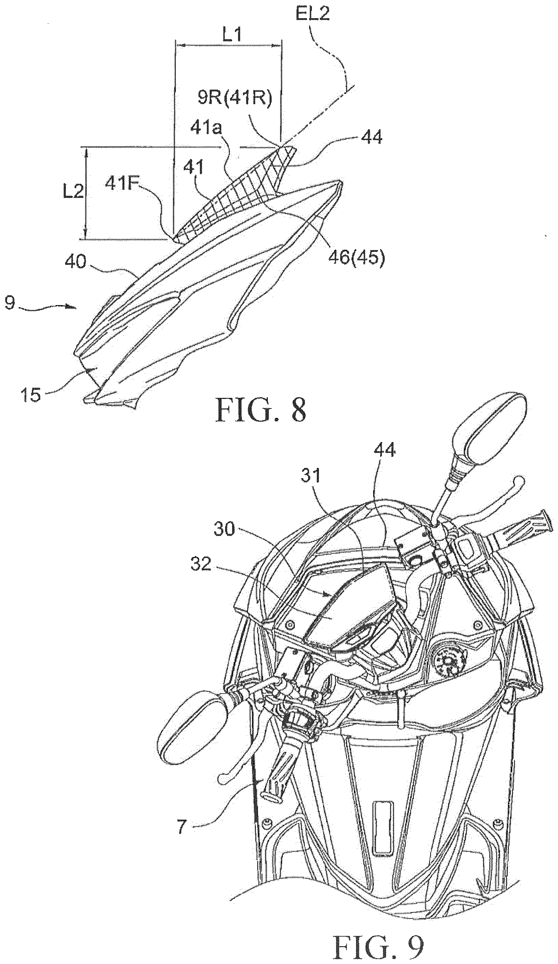

The front cover 9 is now described in detail with reference to FIGs. 2-9. FIG. 5 is an enlarged front portion of the scooter-type vehicle when observed from a driver riding the scooter-type vehicle. FIG. 6 is a front view of a front cover. FIG. 7 is a three-dimensional view thereof. FIG. 8 is a side view thereof. FIG. 9 is an enlarged front portion of the scooter-type vehicle when observed from a driver riding the scooter-type vehicle, and is a diagram indicating that the handlebar is rotated to the maximum angle.

### (The whole structure of the front cover)

As shown in FIG. 4, a front cover 9 is disposed in front of the head pipe 21. The front cover 9 has a front plane 40 extending backwards and upwards in a side view, and a front cover upper portion 41 formed in a manner protruding upwards relative to the front plane 40 also in a side view.

### (Headlamp)

A headlamp 15 is disposed in a lower portion of the front cover 9. The headlamp 15 is disposed below the front plane 40. The headlamp 15 has a headlamp cover 15c, as shown in FIG. 2 and FIG. 4, the headlamp cover 15c of the headlamp 15 is disposed in the lower portion of the front cover 9, and a part thereof is exposed from an opening 9a of the lower portion of the front cover 9. A lamp body not shown is disposed on an inner side of the headlamp 15. In the scooter-type vehicle 1, a relatively large headlamp is employed in order to increase the quantity of light irradiated or emitted from the headlamp 15. As shown in FIG. 2, in a front view, the headlamp 15, for example, is V-shaped, and an upper edge 15b extends from the center in the vehicle width direction towards an outer side (left and right sides) in the vehicle width direction and above. Also, in a front view, the headlamp 15, for example, is in bilateral symmetry relative to a central line in the vehicle width direction. The length in the vehicle width direction of the headlamp 15 is longer than that of the front cover upper portion 41. That is, a vehicle width direction right end of the headlamp 15 is located closer to a vehicle width direction outer side (right side) than a vehicle width direction right end 45 of the front cover upper portion 41, and a vehicle width direction left end of the headlamp 15 is located closer to a vehicle width direction outer side (left side) than a vehicle width direction left end 46 of the front cover upper portion 41. Also, the upper end of the headlamp 15 is located further below than a lower end of the front cover upper portion 41, that is, the front end 41 F. Also, as shown in FIG. 4, in a side view, the headlamp 15 extends backwards and upwards. In a side view, for an up-down direction length of the headlamp 15, a rear up-down direction length is shorter than the front one of the headlamp 15. Also, as shown in FIG. 4, the front end 15a of the headlamp 15 is located further forward than the axle 6a of the front wheel 6. That is, the front end 15a of the headlamp cover 15c of the headlamp 15 is located further forward than the axle 6a of the front wheel 6. Thus, interference with members disposed behind the headlamp 15 can be avoided, and a large headlamp can be disposed in a limited space. Also, the front end 15a of the headlamp 15 is located further rearward than the front end 6F of the front wheel 6, and is higher than a lower end of the head pipe 21 and higher than an upper end of the bottom bracket 11. A position lamp 16 smaller than the headlamp 15 and in a triangular shape is disposed in a lower portion of the front plane 40 and above the headlamp 15. As shown in FIG. 2, the position lamp 16 is disposed in the center in the vehicle width direction. Also, as shown in FIG. 4, the position lamp 16 is entirely located further forward than the axle 6a of the front wheel 6. Moreover, the configuration, shape, and size of the headlamp are not limited to the above. For example, the front end of the headlamp may also be located further forward than the front wheel of the vehicle wheel. Also, for example, the length of the headlamp in the vehicle width direction may also be shorter than that of the front cover upper portion.

### (Front plane)

The front cover 9 has a front plane 40 extending backwards and upwards from the upper edge 15b of the headlamp 15. As shown in FIG. 2, in a front view, the front plane 40 is disposed between the headlamp 15 and the front cover upper portion 41 and on a vehicle width direction outer side (right and left) of the front cover upper portion 41. Also, the front cover 9 has left and right planes 49 disposed on vehicle width direction outer sides (right and left) of the headlamp 15. In a front view, the front plane 40 and the left and right planes 49, for example, are in bilateral symmetry relative to the central line in the vehicle width direction. As shown in FIG. 3, in a top view, the front plane 40 extends to be further rearward than the front cover upper portion 41. As shown in FIG. 4, in a side view, by comparing a lower portion and a rear portion of the front plane 40 with its lower portion and front portion, a tilt angle of a front surface (surface) of the front plane 40 relative to the horizontal plane is more gentle. However, the configuration, shape, and size of the front plane are not limited to the above.

### (Front cover upper portion)

As shown in FIGs. 2-4, the front cover 9 has a front cover upper portion 41, and the front cover upper portion 41 is located at the center in the vehicle width direction of the upper portion of the front cover, and at least one part thereof is located between one end (right end 34) and the other end (left end 35) in the vehicle width direction of the instruction unit 30, and extends backwards and upwards. In addition, the front cover upper portion 41 formed in a manner protruding upwards relative to the front plane 40 of the front cover 9 as in the present invention sometimes is also referred to as a visor plate. The front cover upper portion 41 is a member preventing raindrops from reaching the metering unit 31. As shown in FIG. 8, the front cover upper portion 41 is formed, in a side view, in a manner protruding upwards relative to the front plane 40. That is, in this implementation form, the "front cover upper portion" refers to a part (a hatched portion of FIG. 8) protruding upwards relative to the front plane 40.

As shown in FIG. 2, the front cover upper portion 41 is, in a vehicle width direction, at least partially located between the right end 34 and the left end 35 in the vehicle width direction of the metering unit 30. In other words, at least one part of the front cover upper portion 41 overlaps with the metering unit 30 in a vehicle width direction. The length of the front cover upper portion 41 in the vehicle width direction is longer than that of the metering unit 30. As shown in FIG. 2, the right end 45 of the front cover upper portion 41 in the vehicle width direction is located closer to the outer side (right side) in the vehicle width direction than the right end 34 of the metering unit 30 in the vehicle width direction, and the left end 46 of the front cover upper portion 41 in the vehicle width direction is located closer to the outer side (left side) in the vehicle width direction than the left end 35 of the metering unit 30 in the vehicle width direction. However, it is feasible that, in the vehicle width direction, at least one part of the upper portion of the front cover is located between the right end and the left end in the vehicle width direction of the metering unit. For example, the length of the metering unit in the vehicle width direction and the length of the front cover upper portion in the vehicle width direction may also be identical. Also, for example, the right end of the front cover upper portion in the vehicle width direction may also be located closer to the outer side (right side) in the vehicle width direction than the right end of the metering unit in the vehicle width direction, while the left end of the front cover upper portion in the vehicle width direction is located closer to the inner side in the vehicle width direction than the left end of the metering unit in the vehicle width direction. Also, for example, the left end of the front cover upper portion in the vehicle width direction may also be located closer to the outer side (left side) in the vehicle width direction than the left end of the metering unit in the vehicle width direction, and the right end of the front cover upper portion in the vehicle width direction is located closer to the inner side in the vehicle width direction than the right end of the metering unit in the vehicle width direction. Also, for example, the right end of the front cover upper portion in the vehicle width direction may be located closer to the inner side in the vehicle width direction than the right end of the metering unit in the vehicle width direction, and the left end of the front cover upper portion in the vehicle width direction is located closer to the inner side in the vehicle width direction than the left end of the metering unit in the vehicle width direction. Therefore, for example, the length of the front cover upper portion in the vehicle width direction may also be shorter than that of the metering unit.

As shown in FIGs. 6-7, the front cover upper portion 41 has: a right surface 42 (first surface), formed in a manner that a right edge 42a (vehicle width direction outer-side end portion) is located further rearward than the center in the vehicle width direction; and a left surface 43 (second surface), formed in a manner that a left edge 43a (vehicle width direction outer-side end portion) opposite a side where the right surface 42 (first surface) is disposed is located further rearward than the center in the vehicle width direction. That is, as shown in FIGs. 6 and 7, the front cover upper portion 41 is divided into a right surface 42 (first surface) and a left surface 43 (second surface) by using the front edge 41a of the center in the vehicle width direction as a boundary. The right surface 42 is formed in a manner that a right edge 42a (vehicle width direction outer-side end portion) is located further rearward than the front edge 41a of the center in the vehicle width direction and tilts rightwards and backwards. The left surface 43 (second surface) is formed in a manner that a left edge 43a (vehicle width direction outer-side end portion) is located further rearward than the front edge 41a of the center in the vehicle width direction and tilts leftwards and backwards.

Also, as shown in FIG. 4, the rear end 41R of the center in the vehicle width direction of the front cover upper portion 41 (the same as the rear end 9R of the center in the vehicle width direction of the front cover 9) is located further forward than the metering unit 30, and located further below than the upper end 30U of the metering unit 30. Also, as shown in FIG. 2, the rear end 41R of the center in the vehicle width direction of the front cover upper portion 41 is located further above or higher than the lower end 30L of the metering unit 30. The wiring harness portion 18 extending downwards from the bottom 33 of the metering 30, in a front view, is hidden behind the front cover upper portion 41.

As shown in FIG. 4, in a side view, an extension line EL1 of the center in the vehicle width direction of the front cover 9 passes further forward than the metering unit 30. More specifically, the extension line EL1 is a straight line that connects the front end 9F and the rear end 9R of the front edge 41a of the center in the vehicle width direction of the front cover 9. That is, a tilt angle θ1 from the front end 9F of the front edge 41a of the center in the vehicle width direction of the front cover 9 to the rear end 9R, that is, an angle relative to the horizontal line in a side view, is set in a manner passing through a position further forward than the metering unit 30. In other words, in a side view, the metering unit 30 is set in a manner being within a tilt angle θ1 of an acute angle formed by the extension line EL1 and the horizontal line. Herein, the muddy water on the front cover 9 that reaches the rear end 9R of the center in the vehicle width direction of the front cover 9 splashes towards the direction of the extension line EL1 of the center in the vehicle width direction of the front cover 9 in a side view. Therefore, if the tilt angle θ1 is set in a manner becoming an angle passing through a position further forward than the metering unit 30, the muddy water splashes along the extension line EL1, and easily splashes upwards in front of the metering unit 30. Therefore, the muddy water impacting the metering unit 30 is reduced. The tilt angle θ1, for example, is set to be above 40 degrees and below 50 degrees. However, the tilt angle θ1 is not limited thereto.

Also, as shown in FIG. 8, the extension line of the front edge 41a of the front cover upper portion 41, that is, the extension line EL2 of the front cover upper portion, also passes through the position further forward than the metering unit 30. The extension line EL2 of the front cover upper portion is a straight line that connects the front end 41F and the rear end 41R of the center in the vehicle width direction of the front cover upper portion 41. That is, a tilt angle θ2 from the front end 41F of the center in the vehicle width direction of the front cover upper portion 41 to the rear end 41R, that is, an angle θ2 relative to the horizontal line in a side view, is set in a manner passing through a position further forward than the metering unit 30. In other words, in a side view, the metering unit 30 is set in a manner being within a tilt angle θ2 of an acute angle formed by the extension line EL2 of the front cover upper portion and the horizontal line. Herein, as shown in FIG. 8, the vehicle front-back-direction length L1 in the vehicle width direction of the front cover upper portion 41 is longer than the up-down-direction length L2.

That is, the vehicle front-back-direction length L1 in the vehicle width direction of the front edge 41a of the front cover upper portion 41 is longer than the up-down-direction length L2. In other words, the tilt angle θ2 from the front end 41F of the center in the vehicle width direction of the front cover upper portion 41 to the rear end 41R, that is, the angle relative to the horizontal line in a side view, is less than 45 degrees.

Also, the front end 9F of the center in the vehicle width direction of the front cover 9 is located further forward than the front end 15a of the headlamp 15. As the front end 9F of the center in the vehicle width direction of the front cover 9 is located further forward than the front end 15a of the headlamp 15, even if the muddy water swept up by the front wheel 6 is on the headlamp 15, it is also difficult for the muddy water to further move from the headlamp 15 to the surface of the front cover 9. Therefore, the quantity of the muddy water splashing backwards from the rear end 41R in the vehicle width direction of the front cover 9 is reduced, which can inhibit the muddy water from splashing to the metering unit 30. Moreover, the front end of the center in the vehicle width direction of the front cover may also be located further rearward than the front end of the headlamp. Also, the front end 9F of the center in the vehicle width direction of the front cover 9 is located further forward than the axle 6a of the front wheel 6, and located further rearward than the front end 6F of the front wheel 6.

Moreover, the front end 41F of the center in the vehicle width direction of the front cover upper portion 41 is located further forward than the front end 21F of the head pipe 21. The front end 41F of the center in the vehicle width direction of the front cover upper portion 41 is located further rearward the front end 9F of the center in the vehicle width direction of the front cover 9.

Also, as shown in FIG. 6, the rear edge 44 of the front cover upper portion 41 including the rear end 41R (9R) of the center in the vehicle width direction of the front cover upper portion 41 tilts towards a side and a lower side of the vehicle in a front view in a manner that, in the front view, the outer ends 45 and 46 of the rear edge 44 in the vehicle width direction are located further below than the rear end 41R. As shown in FIG. 8, the rear edge 44 of the front cover upper portion 41 tilts towards the front and the lower side in a side view in a manner that, in the side view, the outer ends 45 and 46 are located further below than the rear end 41R. As shown in FIG. 9, the rear edge 44 passes under the handlebar 7 when the rear edge is in a state where the handlebar 7 is rotated to the maximum angle. That is, in a state where the handlebar 7 is rotated to the maximum angle, a gap exists between the handlebar 7 and the rear edge 44 in a vehicle up-down direction, and the handlebar 7 will not contact the rear edge 44 even in a state where the handlebar 7 is rotated to the maximum angle.

Also, as shown in FIG. 4, the lower portion of the front cover upper portion 41 in a side view is located further above or higher than the front plane 40 in the side view. Also, as shown in FIGs. 6 and 7, in a front view, a horn hole 19 for the sound of the following horn 12 to pass through is disposed between the lower portion of the front cover upper portion 41 and the front plane 40 in the up-down direction. In the front view, the horn hole 19 is located further below than the lower portion of the front cover upper portion 41.

### <Handlebar>

The handlebar 7 is now described in detail with reference to FIGs. 2-4. The handle 7 is supported on an upper end portion of the steering shaft 10. As shown in FIG. 2, the handlebar 7 is, in a front view, substantially in a Y shape with a concave portion 7a in the central portion. The handlebar 7 has a grip portion 7b for a rider to grip. The grip portion 7b is disposed at two ends in the vehicle width direction. As shown in FIG. 4, the rear end 41R of the center in the vehicle width direction of the front cover upper portion 41 is located further below than an upper end 7b1 of the grip portion 7b of the handlebar 7. Therefore, compared with the structure of the scooter-type vehicle in the prior art where the metering unit is disposed in a space behind the upper portion of the front cover (a space formed by the upper portion of the front cover), the rear end 41R may be located below, to enable the upper portion of the front cover 9 to be reduced in size in an up-down direction.

### <Metering unit>

The metering unit 30 is now described in detail with reference to FIGs. 2-5. The metering unit 30 is mounted to the center in the vehicle width direction of the handlebar 7. As shown in FIG. 2, the metering unit 30 is mounted to the concave portion 7a of the handle 7. The lower end 30L of the metering unit 30 is located further below than the grip portion 7b of the handlebar 7. The metering unit 30 is located further rearward than the rear end 41R of the center in the vehicle width direction of the front cover upper portion 41.

The metering unit 30 is substantially rectangular, and is longer in the vehicle width direction length than the front-back direction length. As shown in FIG. 4, the front-back direction length of the metering unit 30 is shorter than the front-back direction length of the front end 21F of the head pipe 21 to the rear end 21R. Also, a display portion 31 is disposed inside the metering unit 30. For example, a current vehicle speed is displayed in the display portion 31.

Also, the metering unit 30 has a transparent cover 32. The transparent cover 32 is disposed on an upper surface of the metering unit 30. The rider reads the display portion 31 via the transparent cover 32. The transparent cover 32 is disposed in a manner tilting backwards and downwards in a side view, to make it easy for the rider to identify. That is, the line perpendicular to the transparent cover 32 extends towards the direction of the driver's face. Also, the metering unit 30 is also entirely disposed in a manner tilting backwards and downwards in a side view. However, the size or mounting direction of the metering unit 30 is not limited thereto.

As shown in FIG. 4, the front end 30F of the metering unit 30 is located further forward than the rear end 21R of the head pipe 21, and the rear end 41R of the center in the vehicle width direction of the front cover upper portion 41 is located further rearward than the front end 21F of the head pipe 21. A front-back-direction distance between the front end 30F of the metering unit 30 and the rear end 9R of the center in the vehicle width direction of the front cover upper portion 41 is shorter than the front-back-direction length of the metering unit 30. The metering unit 30 is entirely disposed further forward than the shaft axis SL of the steering shaft 10.

Also, the front end 30F of the metering unit 30 is located further rearward than the front end 21F of the head pipe 21. Also, as shown in FIG. 4, the front end 30F of the metering unit 30 is located further rearward than a vertical line VL passing through the rear end 6R of the front wheel 6. As shown in FIG. 2, the bottom 33 of the metering unit 30 is connected with a wiring harness portion 18. The wiring harness portion 18 is water-proof, extends downwards from the bottom 33 of the metering unit 30, and is connected to electrical parts (not shown) disposed between the front cover 9 and the leg shield 14.

### <Horn>

The scooter-type vehicle 1 has a horn 12 disposed behind the front cover 9. The horn 12 is used for sounding an alarm, and is disposed between the front cover 9 and the leg shield 14. That is, the horn 12 is present further rearward than the horn hole 19. Moreover, as shown in FIG. 2 and FIG. 6, in a front view, the horn 12 overlaps with at least one part of the horn hole 19. However, in the front view, the horn and the horn hole may not overlap.

### <Effects of the embodiments>

As stated above, the straddle-type vehicle 1 of this implementation form has: a vehicle body frame 2, which has a head pipe 21; a steering shaft 10, rotatably supported on the head pipe 21; a front wheel 6, supported on the vehicle body frame 2 via the steering shaft 10; a handlebar 7, supported on an upper end portion of the steering shaft 10; a metering unit 30, having a transparent cover 32; a front cover 9, disposed in front of the head pipe 21; and a headlamp 15, disposed in a lower portion of the front cover 9; wherein a front end 15a of the headlamp 15 is located further forward than an axle 6a of the front wheel 6, the metering unit 30 is mounted to the center of a vehicle width direction of the handlebar 7, the front cover 9 has a front cover upper portion 41 located in the center in the vehicle width direction of an upper portion thereof, and, in a vehicle width direction, at least partially located between one end and the other end in the vehicle width direction of the metering unit 30 and extending backwards and upwards, a rear end 41R (9R) of the center in the vehicle width direction of the front cover upper portion 41 is located further forward than the metering unit 30 and located further below than an upper end 30U of the metering unit 30, the rear end 41R (9R) of the center in the vehicle width direction of the front cover upper portion 41 is located further above or higher than a lower end 30L of the metering unit 30, and in a side view, an extension line EL1 of the center in the vehicle width direction of the front cover 9 passes through a position further forward than the metering unit 30.

According to this implementation form, as the metering unit 30 is disposed on the handlebar 7, it is unnecessary to set an arrangement space of the metering unit 30 in the front cover upper portion 41. Also, the rear end 41R of the center in the vehicle width direction of the front cover upper portion 41 is located further forward than the metering unit 30, and located further below than the upper end 30U of the metering unit 30. Therefore, compared with the manner disposing the rear end 41R of the center in the vehicle width direction of the front cover upper portion 41 further above or higher than the upper end 30U of the metering unit 30 and further rearward than the front end 30F of the metering unit 30, the front cover upper portion 41 is reduced. In this way, the upper portion of the front cover 9 can be reduced in size in a front-back direction and an up-down direction.

Also, the rear end 41R of the center in the vehicle width direction of the front cover upper portion 41 is located above the lower end 30L of the metering unit 30, and thus the muddy water discharged from the rear end 41R of the center in the vehicle width direction of the front cover upper portion 41 splashes upwards and backwards substantially along the tilt angle of the front cover upper portion 41. The inventors noticed that, if the rear end 41R of the center in the vehicle width direction of the front cover upper portion 41 is located further below than the lower end of the metering unit 30, the muddy water easily impacts the metering unit 30. Therefore, at first, the rear end 41R of the center in the vehicle width direction of the front cover upper portion 41 is disposed further above or higher than the lower end 30L of the metering unit 30. Also, in a side view, an extension line EL1 of the center in the vehicle width direction of the front cover 9 passes through a position further forward than the metering unit 30. Even if the rear end 41R of the center in the vehicle width direction of the front cover upper portion 41 is disposed further above or higher than the lower end 30L of the metering unit 30, if the tilt angle of the center in the vehicle width direction of the upper portion of the front cover 9 is smaller, the muddy water also easily impacts the metering unit 30. Herein, the muddy water reaching the rear end 41R of the center in the vehicle width direction of the front cover upper portion 41, in a side view, splashes towards the direction of the extension line EL1 of the center in the vehicle width direction of the front cover 9. Therefore, if the tilt angle θ1 is set in a manner passing through a position further forward than the metering unit 30, the muddy water easily splashes along the extension line EL1, and splashes upwards in front of the metering unit 30. Therefore, the muddy water impacting the metering unit 30 is reduced.

Also, in terms of a vehicle where the headlamp 15 is located further forward than the axle 6a of the front wheel 6, the tilt angle of the center in the vehicle width direction of the front cover 9 easily becomes gentle. Thus, if the upper portion of the front cover 9 is reduced in size in a front-back direction and an up-down direction, the tilt angle of the center in the vehicle width direction of the front cover 9 becomes more gentle. If the tilt angle of the center in the vehicle width direction of the front cover 9 becomes gentle, it is difficult for the muddy water on the front cover 9 to flow towards left and right. In this way, even if in a structure where the muddy water easily flows along the center in the vehicle width direction of the front cover 9, the water flowing to the rear end 41R of the center in the vehicle width direction of the front cover upper portion 41 may not impact the metering unit 30, but is discharged backwards. Therefore, it is difficult for the mud contained in the water to form on the transparent cover 32 of the metering unit 30. Thus, impact to the riders' comfort may be inhibited.

Thus, in a structure where the headlamp 15 disposed in a lower portion of the front cover 9 is located further forward than the axle 6a of the front wheel 6, the upper portion of the front cover 9 may be reduced in size in a front-back direction and an up-down direction, and impact on the riders' comfort may be inhibited.

Also, in a preferred form of the scooter-type vehicle 1 of this implementation form, a front end 30F of the metering unit 30 is located further forward than a rear end 21R of the head pipe 21, and the rear end 41R of the center in the vehicle width direction of the front cover upper portion 41 is located further rearward than a front end 21F of the head pipe 21.

According to this implementation form, a front end 30F of the metering unit 30 is located further forward than a rear end 21R of the head pipe 21, and the rear end 41R of the center in the vehicle width direction of the front cover upper portion 41 is located further rearward than a front end 21F of the head pipe 21. Therefore, a vehicle front-back-direction distance between the rear end 41R of the center in the vehicle width direction of the front cover upper portion 41 and the front end 30F of the metering unit 30 is shortened. That is, the rear end 41R of the center in the vehicle width direction of the front cover upper portion 41 is located near the front end 30F of the metering unit 30. Therefore, the muddy water swept up by the front wheel 6 and flowing to the rear end 41R of the center in the vehicle width direction of the front cover upper portion 41 easily goes beyond the metering unit 30. Therefore, the front cover 9 may not become long or extended, the upper portion of the front cover 9 may be reduced in size in a front-back direction and an up-down direction, and impact on the riders' comfort may be inhibited.

In a preferred form of the straddle-type vehicle 1 of this implementation form, a vehicle front-back-direction length L1 of the center in the vehicle width direction of the front cover upper portion 41 is longer than an up-down-direction length L2.

According to the third implementation form, a vehicle front-back-direction length L1 of the center in the vehicle width direction of the front cover upper portion 41 is longer than an up-down-direction length L2. In other words, a tilt angle θ2 of an extension line EL2 of the front cover upper portion connecting the front end 41F and the rear end 41R of the center in the vehicle width direction of the front cover upper portion 41 relative to the horizontal line is less than 45 degrees. Therefore, for example, as per the straddle-type vehicle described in Patent Document 1, the vehicle front-back-direction length of the center in the vehicle width direction of the front cover upper portion is the same as or shorter than the up-down-direction length. In other words, compared with the straddle-type vehicle where the tilt angle of the extension line connecting the front end and the rear end of the center in the vehicle width direction of the front cover upper portion and the horizontal line is more than 45 degrees, the tilting of the center in the vehicle width direction of the front cover upper portion 41 may become gentle. As stated above, the upper portion of the front cover 9 may be reduced in size in an up-down direction.

In a preferred form of the straddle-type vehicle 1 of this implementation form, the handlebar 7 has a grip portion 7b for a driver to grip, and the rear end 41R of the center in the vehicle width direction of the front cover upper portion 41 is located further below than an upper end 7b1 of the grip portion 7b.

According to this implementation form, for example, as the straddle-type vehicle described in Patent Document 1, compared with the straddle-type vehicle where the rear end of the center in the vehicle width direction of the front cover upper portion is as high as an upper end of the grip portion of the handlebar or higher than the upper end, the rear end 41R of the center in the vehicle width direction of the front cover upper portion 41 may become lower. As stated above, the upper portion of the front cover 9 may be reduced in size in an up-down direction.

In a preferred form of the straddle-type vehicle 1 of this implementation form, it has a wiring harness portion connected to the bottom 33 of the metering unit 30, wherein in a front view, the wiring harness portion 18 is hidden behind the front cover upper portion 41.

According to this implementation form, the upper portion of the front cover 9 shields the wiring harness portion 18 of the metering unit 30 from the front. Therefore, the appearance can be improved when the vehicle is in a front view, and the muddy water splashing towards the wiring harness portion 18 from the front cover 9 can be prevented from splashing to the wiring harness portion 18.

In a preferred form of the straddle-type vehicle 1 of this implementation form, the metering unit 30 is disposed further forward than a shaft axis SL of the steering shaft 10.

According to this implementation form, the metering unit 30 is disposed further forward than a shaft axis SL of the steering shaft 10, and thus the metering unit 30 may be located near the front cover upper portion 41. Therefore, the muddy water swept up by the front wheel 6 and flowing to the rear end 41R of the center in the vehicle width direction of the front cover upper portion 41 easily goes beyond the metering unit 30. Therefore, the front cover 9 may not be extended, the upper portion of the front cover 9 may be reduced in size in a front-back direction and an up-down direction, and impact on the riders' comfort may be inhibited.

In a preferred form of the straddle-type vehicle 1 of this implementation form, the front cover upper portion 41 has: a right surface 42 (first surface), formed in a manner that a right edge 42a (vehicle width direction outer-side end portion) is located further rearward than the center in the vehicle width direction; and a left surface 43 (second surface), formed in a manner that a left edge 43a (vehicle width direction outer-side end portion) opposite a side where the right surface 42 is disposed is located further rearward than the center in the vehicle width direction.

According to this implementation form, the water on the surface of the front cover 9, due to the air flow generated during driving, advances along the right surface 42 (first surface) or the left surface 43 (second surface) towards a vehicle width direction outer side, and splashes from the upper portion of the front cover 9 towards the outer side in the vehicle width direction, and thus the muddy water does not form easily on the transparent cover 32 of the metering unit 30. Therefore, the front cover 9 may not be extended, the upper portion of the front cover 9 may be reduced in size in a front-back direction and an up-down direction, and impact to the riders' comfort may be inhibited.

In a preferred form of the straddle-type vehicle 1 of this implementation form, a rear edge 44 of the front cover upper portion 41 including the rear end 41R of the center in the vehicle width direction of the front cover upper portion 41 is, in a front view, formed in a manner that vehicle width direction outer ends 45 and 46 are located further below than the rear end 41R, and in a state where the handlebar 7 is rotated to the maximum angle, the rear edge 44 passes under the handlebar 7.

According to this implementation form, when the handlebar 7 is operated, the handlebar 7 does not interfere with the front cover upper portion 41, and thus a gap between the upper portion of the front cover 9 and the metering unit 30 may be reduced in a vehicle front-back direction. Thus, the muddy water swept up by the front wheel 6 and flowing to the rear end 41R of the center in the vehicle width direction of the front cover upper portion 41 easily goes beyond the metering unit 30. Therefore, the front cover 9 may not be extended, the upper portion of the front cover 9 may be reduced in size in a front-back direction and an up-down direction, and impact to the riders' comfort may be inhibited.

Also, in a preferred form of the straddle-type vehicle 1 of this implementation form, the front cover 9 has a front plane 40 extending backwards and upwards from an upper edge 15b of the headlamp 15, the front cover upper portion 41 is formed in a manner protruding upwards relative to the front plane 40, and the straddle-type vehicle has a horn 12 disposed behind the front cover 9, and a horn hole 19 for the sound of the horn 12 to pass through is disposed between a lower end portion of the front cover upper portion 41 and the front plane 40, wherein in a front view, the horn 12 overlaps with the horn hole 19.

According to this implementation form, a horn hole 19 for the sound of the horn 12 to pass is disposed between a lower end portion of the front cover upper portion 41 and the front plane 40, and thus there is an order difference portion formed by the horn hole 19 between the lower end portion of the front cover upper portion 41 and the front plane 40. Therefore, it is difficult for the muddy water swept up by the front wheel 6 and on the front plane 40 of the front cover 9 to reach the surface of the front cover upper portion 41. Therefore, it is difficult for the muddy water to form on the transparent cover 32 of the metering unit 30. In this way, impact on the riders' comfort may be inhibited.

### <Varying embodiment

The above describes the embodiments of the present invention, but the present invention is not limited to the above embodiments, and various design changes may be made without departing from the present invention as recited in the claims.

For example, in this implementation form, the upper portion of the front cover is, in a side view, formed in a manner protruding upwards relative to the front plane 40, but the upper portion of the front cover may not be, in a side view, formed in a manner protruding upwards relative to other portions of the front cover. For example, the front cover may include a cover surface, and the center of the upper portion thereof is a front cover upper portion.

Also, for example, in this implementation form, the front end 30F of the metering unit 30 is located further forward than the rear end 21R of the head pipe 21, the rear end 9R of the center in the vehicle width direction of the upper portion of the front cover 9 is located further rearward than the front end of the head pipe 21, but the front end of the metering unit may also be located further rearward the rear end of the head pipe, and the rear end of the center in the vehicle width direction of the front cover upper portion may also be located further forward than the front end of the head pipe.

Also, for example, in this implementation form, the situation where the wiring harness portion 18 connected to the bottom 33 of the metering unit 30 is hidden behind the front cover upper portion 41 is described, but the wiring harness portion may not be hidden behind the front cover upper portion.

Also, for example, in this implementation form, the situation where the metering unit 30 is disposed further forward than the shaft axis SL of the steering shaft 10 as shown in FIG. 4 is described, but the metering unit may also be partially or wholly disposed further rearward than the shaft axis of the steering shaft.

Also, the following situation is described, that is, the front cover upper portion 41 has: a right surface 42 (first surface), formed in a manner that a right edge 42a (vehicle width direction outer-side end portion) is located further rearward than the center in the vehicle width direction; and a left surface 43 (second surface), formed in a manner that a left edge 43a (vehicle width direction outer-side end portion) opposite a side where the right surface 42 is disposed is located further rearward than the center in the vehicle width direction. However, the front cover upper portion may be formed not in a manner that the outer-side end portion in the vehicle width direction is located further rearward than the center in the vehicle width direction. For example, the front cover upper portion may be formed in one plane.

Also, for example, in this implementation form, the situation where the rear edge 44 of the front cover upper portion 41 is formed in a manner that vehicle width direction outer sides 45 and 46 are located further below than the rear end 41R of the center in the vehicle width direction is described, but, for example, the rear edge of the front cover upper portion may also extend horizontally relative to the ground.

Also, for example, in this implementation form, the following situation is described, that is, in a side view, the lower portion of the front cover upper portion 41 is located further above or higher than the front plane 40, and a horn hole 19 for the sound of the horn to pass through is disposed between the lower portion of the front cover upper portion 41 and the front plane 40; however, the horn hole for the sound of the horn to pass may not be disposed between the lower portion of the front cover upper portion and the front plane, and the lower portion of the front cover upper portion may not be located further above or higher than the front plane. That is, the lower portion of the front cover upper portion and the front plane may also be connected without order difference.

Also, for example, in this implementation form, the following situation is described, that is, the vehicle front-back-direction length L1 of the center in the vehicle width direction of the front cover upper portion 41 is longer than the up-down-direction length L2. In other words, a tilt angle θ2 formed by a line connecting the front end 41F and the rear end 41R of the center in the vehicle width direction of the front cover upper portion 41 and the horizontal line is less than 45 degrees. However, the vehicle front-back-direction length of the center in the vehicle width direction of the front cover upper portion is the same as or shorter than the up-down-direction length. In other words, the tilt angle formed by the line connecting the front end and the rear end of the center in the vehicle width direction of the front cover upper portion and the horizontal line may also be more than 45 degrees.

Also, for example, in this implementation form, the rear end 41R of the center in the vehicle width direction of the front cover upper portion 41 is located further below than the upper end 7b1 of the grip portion 7b of the handlebar 7, but may also be located in the same position or a higher position in the up-down direction.

Also, in the straddle-type vehicle of the present invention, it may also have more than three vehicle wheels but not limited to two. For example, it may also have two front wheels and one rear wheel. The straddle-type vehicle is imited to the scooter-type vehicle.

### List of Reference Numerals

- 1: Straddle-type vehicle
- 2: Vehicle body frame
- 3: Front fork
- 4: Power unit
- 5: Saddle portion
- 5a: Front saddle portion
- 5b: Rear saddle portion
- 6: Front wheel
- 6a: Axle
- 6F: Front end
- 6R: Rear end
- 7: Handlebar
- 7a: Concave portion
- 7b: Grip portion
- 7b1: Upper end
- 8: Rear wheel
- 9: Front cover
- 9a: Opening
- 9F: Front end
- 9R: Rear end
- 10: Steering shaft
- 11: Bottom bracket
- 12: Horn
- 13: Storage box
- 14: Leg shield
- 15: Headlamp
- 15a: Front end
- 15b: Upper edge
- 15c: Headlamp cover
- 16: Position lamp
- 18: Wiring harness portion
- 19: Horn hole
- 20: Front fender
- 20a: Front end
- 21: Head pipe
- 21F: Front end
- 21R: Rear end
- 30: Metering unit
- 30F: Front end
- 30L: Lower end
- 30U: Upper end
- 31: Display portion
- 32: Transparent cover
- 33: Bottom
- 34: Right end (one end)
- 35: Left end (the other end)
- 40: Front plane
- 41: Front cover upper portion
- 41a: Front edge
- 41F: Front end
- 41R: Rear end
- 42: Right surface (first surface)
- 42a: Right edge (vehicle width direction outer-side end portion)
- 43: Left surface (second surface)
- 43a: Left edge (vehicle width direction outer-side end portion)
- 44: Rear edge
- 45: Vehicle width direction outer side
- 46: Vehicle width direction outer side
- 49: Left and right planes
- EL1: Extension line
- EL2: Extension line of the front cover upper portion
- FL: Front
- L1: Vehicle front-back-direction length
- L2: Up-down-direction length
- H: Hinge pin
- SL: Shaft axis
- θ1: Tilt angle
- θ2: Tilt angle
- VL: Vertical line

## Claims

1. A scooter-type vehicle, comprising: a vehicle body frame (2) comprising a head pipe (21); a steering shaft (10) rotatably supported on the head pipe (21); a front wheel (6) supported on the vehicle body frame (2) via the steering shaft (10); a handlebar (7) supported on an upper end portion of the steering shaft (10); a metering unit (30) having a transparent cover (32); a front cover (9) disposed in front of the head pipe (21); and a headlamp (15) disposed in a lower portion of the front cover (9); wherein a front end (15a) of the headlamp (15) is located further forward than an axle (6a) of the front wheel (6), the metering unit (30) is mounted to the center, in a vehicle width direction, of the handlebar (7), the metering unit (30) is mounted to a concave portion (7a) of the handle (7), a lower end (30L) of the metering unit (30) is located further below than a grip portion (7b) of the handlebar (7), the front cover (9) has a front cover upper portion (41) located at the center in the vehicle width direction of an upper portion thereof, and, in a vehicle width direction, at least partially located between one end and the other end in the vehicle width direction of the metering unit (30) and extending backwards and upwards, a rear end (41 R) of the center in the vehicle width direction of the front cover upper portion (41) is located further forward than the metering unit (30) and located further below than an upper end (30U) of the metering unit (30), **characterized in that** the rear end (41 R) of the center in the vehicle width direction of the front cover upper portion (41) is located further above than a lower end (30L) of the metering unit (30), an in a side view, an extension line (EL1) of the center in the vehicle width direction of the front cover (9) passes through a position further forward than the metering unit (30), the extension line (EL1) is a straight line that connects a front end (9F) and a rear end (9R) of a front edge (41a) of the center in the vehicle width direction of the front cover (9), a tilt angle Θ1 of the extension line (EL1) relative to the horizontal line in a side view, is set in a manner passing through a position further forward than the metering unit (30).

2. The scooter-type vehicle according to claim 1, wherein a front end of the metering unit (30) is located further forward than a rear end (21R) of the head pipe (21), and the rear end (41R) of the center, in the vehicle width direction, of the front cover upper portion is located further rearward than a front end of the head pipe (21).

3. The scooter-type vehicle according to claim 1, wherein
a vehicle front-back-direction length of the center, in the vehicle width direction, of the front cover upper portion is longer than an up-down-direction length.

4. The scooter-type vehicle according to claim 1, wherein the handlebar (7) has a grip portion (7b) for a driver to grip, and
the rear end (41R) of the center, in the vehicle width direction, of the front cover upper portions located further below than an upper end (7b1) of the grip portion (7b).

5. The scooter-type vehicle according to claim 1, having a wiring harness portion (18) connected to the bottom of the metering unit (30), wherein
in a front view, the wiring harness portion (18) is hidden behind the front cover upper portion.

6. The scooter-type vehicle according to claim 1, wherein the metering unit (30) is disposed further forward than a shaft axis (SL) of the steering shaft (10).

7. The scooter-type vehicle according to claim 1, wherein
the front cover upper portion has:
a first surface (42), formed in a manner that a vehicle width direction outer-side end portion is located further rearward than the center, in the vehicle width direction; and
a second surface (43), formed in a manner that a vehicle width direction outer-side end portion opposite a side where the first surface (42) is disposed is located further rearward than the center, in the vehicle width direction.

8. The scooter-type vehicle according to claim 1, wherein
a rear edge (44) of the front cover upper portion comprising the rear end (41R) of the center, in the vehicle width direction, of the front cover upper portion is, in a front view, formed in a manner that a vehicle width direction outer end is located further below than the rear end (41R) of the center, in the vehicle width direction, of the front cover upper portion , and
in a state where the handlebar (7) is rotated to the maximum angle, the rear edge (44) passes under the handlebar (7).

9. The scooter-type vehicle according to claim 1, wherein the front cover (9) has a front plane (40) extending backwards and upwards from an upper edge (15b) of the headlamp (15),
the front cover upper portion is formed in a manner protruding upwards relative to the front plane (40), and
the scooter-type vehicle has a horn (12) disposed behind the front cover (9), and
a horn hole (19) for the sound of the horn (12) to pass through is disposed between a lower end portion of the front cover upper portion and the front plane (40),
wherein in a front view, the horn (12) overlaps with the horn hole (19).

## Patentansprüche

1. Ein Rollertyp-Fahrzeug, das einen Fahrzeugkarosserierahmen (2) mit einem Kopfrohr (21); eine Lenkwelle (10), die drehbar an dem Kopfrohr (21) getragen wird; ein Vorderrad (6), das über die Lenkwelle (10) an dem Fahrzeugkarosserierahmen (2) getragen wird; einen Lenker (7), der an einem oberen Endabschnitt der Lenkwelle (10) getragen wird; eine Messeinheit (30) mit einer transparenten Abdeckung (32); eine Frontabdeckung (9), die vor dem Kopfrohr (21) angeordnet ist; und einen Frontscheinwerfer (15) aufweist, der in einem unteren Abschnitt der Frontabdeckung (9) angeordnet ist; wobei ein Vorderende (15a) des Frontscheinwerfers (15) weiter vorne angeordnet ist als eine Achse (6a) des Vorderrads (6), wobei die Messeinheit (30) in der Mitte, in einer Fahrzeugbreitenrichtung, des Lenkers (7) befestigt ist, wobei die Messeinheit (30) an einem konkaven Abschnitt (7a) des Lenkers (7) befestigt ist, wobei sich ein unteres Ende (30L) der Messeinheit (30) weiter unten befindet als ein Griffabschnitt (7b) des Lenkers (7), wobei die Frontabdeckung (9) einen oberen Abschnitt (41) der Frontabdeckung aufweist, der sich in der Mitte, in der Fahrzeugbreitenrichtung, eines oberen Abschnitts desselben befindet sowie, in einer Fahrzeugbreitenrichtung, zumindest teilweise zwischen einem Ende und dem anderen Ende, in der Fahrzeugbreitenrichtung, der Messeinheit (30) befindet und sich nach hinten und nach oben erstreckt, wobei sich ein Rückende (41R) der Mitte, in der Fahrzeugbreitenrichtung, des oberen Abschnitts (41) der Frontabdeckung weiter vorne befindet als die Messeinheit (30) und weiter unten befindet als ein oberes Ende (30U) der Messeinheit (30), **dadurch gekennzeichnet, dass** sich das Rückende (41R) der Mitte, in der Fahrzeugbreitenrichtung, des oberen Abschnitts (41) der Frontabdeckung weiter oben befindet als ein unteres Ende (30L) der Messeinheit (30) und in einer Seitenansicht eine Verlängerungslinie (EL1) der Mitte, in der Fahrzeugbreitenrichtung, der Frontabdeckung (9) durch eine Position verläuft, die sich weiter vorne befindet als die Messeinheit (30), wobei die Verlängerungslinie (EL1) eine gerade Linie ist, die ein Vorderende (9F) und ein Rückende (9R) eines vorderen Rands (41a) der Mitte, in der Fahrzeugbreitenrichtung, der Frontabdeckung (9) verbindet, wobei ein Neigungswinkel Θ1 der Verlängerungslinie (EL1) relativ zu der Horizontallinie in einer Seitenansicht in einer Weise eingestellt ist, dass sie durch eine Position verläuft, die sich weiter vorne befindet als die Messeinheit (30).

2. Das Rollertyp-Fahrzeug gemäß Anspruch 1, bei dem sich ein Vorderende der Messeinheit (30) weiter vorne befindet als ein Rückende (21R) des Kopfrohrs (21) und sich das Rückende (41R) der Mitte, in der Fahrzeugbreitenrichtung, des oberen Abschnitts der Frontabdeckung weiter hinten befindet als ein Vorderende des Kopfrohrs (21).

3. Das Rollertyp-Fahrzeug gemäß Anspruch 1, bei dem
eine Fahrzeuglänge in Vorne-Hinten-Richtung der Mitte, in der Fahrzeugbreitenrichtung, des oberen Abschnitts der Frontabdeckung länger ist als eine Länge in Oben-Unten-Richtung.

4. Das Rollertyp-Fahrzeug gemäß Anspruch 1, bei dem der Lenker (7) einen Griffabschnitt (7b) zum Greifen durch einen Fahrer aufweist und
sich das Rückende (41R) der Mitte, in der Fahrzeugbreitenrichtung, der oberen Abschnitte der Frontabdeckung weiter unten befindet als ein oberes Ende (7b1) des Griffabschnitts (7b).

5. Das Rollertyp-Fahrzeug gemäß Anspruch 1, das einen Kabelbaumabschnitt (18) aufweist, der mit der Unterseite der Messeinheit (30) verbunden ist, wobei
in einer Vorderansicht der Kabelbaumabschnitt (18) hinter dem oberen Abschnitt der Frontabdeckung versteckt ist.

6. Das Rollertyp-Fahrzeug gemäß Anspruch 1, bei dem die Messeinheit (30) weiter vorne angeordnet ist als eine Wellenachse (SL) der Lenkwelle (10).

7. Das Rollertyp-Fahrzeug gemäß Anspruch 1, bei dem der obere Abschnitt der Frontabdeckung folgende Merkmale aufweist:
eine erste Oberfläche (42), die in einer Weise gebildet ist, dass sich ein Außenseitenendabschnitt einer Fahrzeugbreitenrichtung weiter hinten befindet als die Mitte, in der Fahrzeugbreitenrichtung; und
eine zweite Oberfläche (43), die in einer Weise gebildet ist, dass sich ein Außenseitenendabschnitt der Fahrzeugbreitenrichtung gegenüber von einer Seite, an der die erste Oberfläche (42) angeordnet ist, weiter hinten befindet als die Mitte, in der Fahrzeugbreitenrichtung.

8. Das Rollertyp-Fahrzeug gemäß Anspruch 1, bei dem
ein hinterer Rand (44) des oberen Abschnitts der Frontabdeckung mit dem Rückende (41R) der Mitte, in der Fahrzeugbreitenrichtung, des oberen Abschnitts der Frontabdeckung in einer Vorderansicht in einer Weise gebildet ist, dass sich ein Außenende der Fahrzeugbreitenrichtung weiter unten befindet als das Rückende (41R) der Mitte, in der Fahrzeugbreitenrichtung, des oberen Abschnitts der Frontabdeckung, und
in einem Zustand, in dem der Griff (7) in den maximalen Winkel gedreht ist, der hintere Rand (44) unter dem Griff (7) verläuft,

9. Das Rollertyp-Fahrzeug gemäß Anspruch 1, bei dem die Frontabdeckung (9) eine Vorderebene (40) aufweist, die sich von einem oberen Rand (15b) des Frontscheinwerfers (15) nach hinten und nach oben erstreckt,
der obere Abschnitt der Frontabdeckung in einer Weise gebildet ist, dass er relativ zu der Vorderebene (40) nach oben vorsteht, und
das Rollertyp-Fahrzeug eine Hupe (12) aufweist, die hinter der Frontabdeckung (9) angeordnet ist, und
ein Hupenloch (19), durch das der Schall der Hupe (12) laufen kann, zwischen einem unteren Endabschnitt des oberen Abschnitts der Frontabdeckung und der Vorderebene (40) angeordnet ist,
wobei die Hupe (12) in einer Vorderansicht das Hupenloch (19) überlappt.

## Revendications

1. Véhicule de type scooter, comprenant: un châssis de carrosserie de véhicule (2) comprenant un tube de tête (21); un arbre de direction (10) supporté de manière rotative sur le tube de tête (21); une roue avant (6) supportée sur le châssis de carrosserie de véhicule (2) par l'intermédiaire de l'arbre de direction (10); un guidon (7) supporté sur une partie d'extrémité supérieure de l'arbre de direction (10); une unité de mesure (30) présentant un couvercle transparent (32); un couvercle avant (9) disposé devant le tube de tête (21); et un phare (15) disposé dans une partie inférieure du couvercle avant (9); dans lequel une extrémité avant (15a) du phare (15) est située plus en avant qu'un essieu (6a) de la roue avant (6), l'unité de mesure (30) est montée au centre, dans le sens de la largeur de véhicule, du guidon (7), l'unité de mesure (30) est montée sur une partie concave (7a) du guidon (7), une extrémité inférieure (30L) de l'unité de mesure (30) est située plus vers le bas qu'une partie de préhension (7b) du guidon (7), le couvercle avant (9) présente une partie supérieure de couvercle avant (41) située au centre, dans le sens de la largeur de véhicule, d'une partie supérieure de ce dernier et situé, dans le sens de la largeur de véhicule, au moins partiellement entre une extrémité et l'autre extrémité dans le sens de la largeur de véhicule de l'unité de mesure (30) et s'étendant vers l'arrière et vers le haut., une extrémité arrière (41 R) du centre, dans le sens de la largeur de véhicule, de la partie supérieure de couvercle avant (41) est située plus en avant que l'unité de mesure (30) et situé plus vers le bas qu'une extrémité supérieure (30U) de l'unité de mesure (30), **caractérisé par le fait que** l'extrémité arrière (41R) du centre, dans le sens de la largeur de véhicule, de la partie supérieure de couvercle avant (41) est située plus vers le haut qu'une extrémité inférieure (30L) de l'unité de mesure (30) et, dans une vue de côté, une ligne de prolongement (EL1) du centre, dans le sens de la largeur de véhicule, du couvercle avant (9) passe par une position plus en avant que l'unité de mesure (30); la ligne de prolongement (EL1) est une ligne droite qui relie une extrémité avant (9F) et une extrémité arrière (9R) d'un bord avant (41a) du centre, dans le sens de la largeur de véhicule, du couvercle avant (9), un angle d'inclinaison Θ1 de la ligne de prolongement (EL1) par rapport à la ligne horizontale, dans une vue de côté, est réglé de manière à passer par une position plus en avant que l'unité de mesure (30).

2. Véhicule de type scooter selon la revendication 1, dans lequel une extrémité avant de l'unité de mesure (30) est située plus en avant qu'une extrémité arrière (21R) du tube de tête (21), et l'extrémité arrière (41R) du centre, dans le sens de la largeur de véhicule, de la partie supérieure de couvercle avant est située plus en arrière qu'une extrémité avant du tube de tête (21).

3. Véhicule de type scooter selon la revendication 1, dans lequel une longueur dans le sens avant-arrière de véhicule du centre, dans le sens de la largeur de véhicule, de la partie supérieure de couvercle avant est plus longue qu'une longueur dans le sens de haut en bas.

4. Véhicule de type scooter selon la revendication 1, dans lequel le guidon (7) présente une partie de préhension (7b) destinée à être saisie par un conducteur, et
l'extrémité arrière (41R) du centre, dans le sens de la largeur de véhicule, des parties supérieures de couvercle avant est située plus vers le bas qu'une extrémité supérieure (7b1) de la partie de préhension (7b).

5. Véhicule de type scooter selon la revendication 1, présentant une partie de faisceau de câbles (18) connectée au bas de l'unité de mesure (30), dans lequel
dans une vue de face, la partie de faisceau de câbles (18) est cachée derrière la partie supérieure de couvercle avant.

6. Véhicule de type scooter selon la revendication 1, dans lequel l'unité de mesure (30) est disposée plus en avant qu'un axe d'arbre (SL) de l'arbre de direction (10).

7. Véhicule de type scooter selon la revendication 1, dans lequel la partie supérieure de couvercle avant présente:
une première surface (42), formée de sorte qu'une partie d'extrémité du côté extérieur dans le sens de la largeur de véhicule soit située plus en arrière que le centre dans la direction de la largeur de véhicule; et
une deuxième surface (43), formée de sorte qu'une partie d'extrémité du côté extérieur dans le sens de la largeur de véhicule opposée à un côté où est disposée la première surface (42) soit située plus en arrière que le centre dans le sens de la largeur de véhicule.

8. Véhicule de type scooter selon la revendication 1, dans lequel un bord arrière (44) de la partie supérieure de couvercle avant comprenant l'extrémité arrière (41R) du centre, dans le sens de la largeur de véhicule, de la partie supérieure de couvercle avant est, dans une vue de face, formé de sorte qu'une extrémité extérieure dans le sens de la largeur de véhicule soit située plus vers le bas que l'extrémité arrière (41R) du centre, dans le sens de la largeur de véhicule, de la partie supérieure de couvercle avant, et
dans un état où le guidon (7) est tourné selon l'angle maximum, le bord arrière (44) passe sous le guidon (7).

9. Véhicule de type scooter selon la revendication 1, dans lequel le couvercle avant (9) présente un plan avant (40) s'étendant vers l'arrière et vers le haut à partir d'un bord supérieur (15b) du phare (15),
la partie supérieure de couvercle avant est formée de manière à faire saillie vers le haut par rapport au plan avant (40), et
le véhicule de type scooter présente un klaxon (12) disposé derrière le couvercle avant (9), et
un trou de klaxon (19) pour le passage du son du klaxon (12) est disposé entre une partie d'extrémité inférieure de la partie supérieure de couvercle avant et le plan avant (40),
dans lequel, en vue de face, le klaxon (12) vient en chevauchement avec le trou de klaxon (19).
